# EUROPÄISCHE PATENTSCHRIFT

(11) **EP 1 544 640 B1**
(45) Veröffentlichungstag und Bekanntmachung des Hinweises auf die Patenterteilung: **20.02.2008**
(21) Anmeldenummer: 04028888.8
(22) Anmeldetag: 07.12.2004
(51) Int. Cl.: G01S 17/89

(54) **Vorrichtung zur Verbesserung der Sichtverhältnisse in einem Kraftfahrzeug**
Device for improving the visibilities in a motor vehicle
Dispositif pour améliorer les visibilités dans une automobile

(30) Priorität: 16.12.2003 DE 10359345
(43) Veröffentlichungstag der Anmeldung: 22.06.2005
(73) Patentinhaber: Daimler AG, 70327 Stuttgart (DE)
(72) Erfinder: Moisel, Jörg, 89233 Neu-Ulm (DE)

(56) Entgegenhaltungen:
- EP-A- 1 118 877
- DE-A1- 3 932 216
- DE-A1- 10 033 103
- US-A1- 2002 191 388

## Beschreibung

Die Erfindung betrifft eine Vorrichtung zur Verbesserung der Sichtverhältnisse in einem Kraftfahrzeug.

Aus der DE 40 32 927 C2 ist eine Vorrichtung zur Verbesserung der Sicht in einem Kraftfahrzeug mit einer Strahlungsquelle für infrarote Strahlung zur Bestrahlung der Umgebung des Fahrzeugs und mit einer lichtempfindlichen Kamera, die den bestrahlten Sichtbereich des Fahrers erfasst und die die erfassten Bilddaten einer als Head-up-Display ausgebildeten Anzeigevorrichtung dem Fahrer zur Verfügung stellt, in dem die Bilddaten als virtuelles Bild der äußeren Landschaft visuell überlagert werden, bekannt. Eine Steuereinheit steuert diese Vorrichtung. Mit dieser Vorrichtung kann der Fahrer nachts oder bei schlechter Witterung erheblich besser sehen. Derartige Vorrichtungen werden auch als Nachtsichtsysteme bezeichnet.

Aus der DE 100 33 103 A1 ist ein Infrarotsichtsystem bekannt, das eine gepulst betriebene IR-Lichtquelle sowie ein IR-Sichtgerät aufweist, das abhängig von den Pulsen der IR-Lichtquelle gepulst betrieben wird. Zusätzlich weist dieses Infrarotsichtsystem einen IR-Detektor zur Erkennung eines IR-Fremdpulses auf, mit dessen Hilfe das Pulsen der IR-Lichtquelle und des IR-Sichtgerätes so gesteuert wird, dass eine Blendung durch die detektierten IR-Fremdimpulse des IR-Sichtgerätes durch die kurzen IR-Fremdpulse verhindert wird. Dies wird durch eine Phasenverschiebung bzw. einer Anpassung der eigenen Pulsfrequenz erreicht. Das Infrarotsichtsystem wird kontinuierlich pulsend betrieben.

Aus der DE 691 05 446 T2 ist ein weiteres Nachtsichtsystem bekannt, welches so ausgebildet ist, dass es einen Umschalter zum Umschalten des Scheinwerfers zwischen dem Zustand Fern- und Abblendlicht aufweist und dass das Nachtsichtsystem so gesteuert ist, dass bei aktiviertem Abblendlicht und bei aktiviertem Fernlicht ein Filter in den Strahlengang des Fernlichtscheinwerfers geschwenkt wird, der nur infrarote Strahlung hindurchtreten lässt wogegen sichtbares Licht gesperrt wird. Diese Vorrichtung erweist sich als sehr anfällig ohne eine wesentliche Verbesserung der Sicht zu erreichen.

Aus der DE 101 56 653 A1 ist ein Verfahren und eine Einrichtung zur automatischen Umschaltung eines Scheinwerfers zwischen dem Zustand Fernlicht und Abblendlicht bekannt, bei welchen mit Hilfe einer mustergestützten Videosensorik alle im Fahrbetrieb auftretenden Blendsituation automatisch erfasst werden und abhängig von den ermittelten Blendsituationen automatisch die Umschaltung des Scheinwerfers zwischen Fernlicht und Abblendlicht erfolgt. Hierdurch gelingt es, das Blenden des Gegenverkehrs durch das ausgesendete Licht zu begrenzen und dadurch die Gefahr von Unfällen zu reduzieren.

Der Erfindung liegt die Aufgabe zugrunde, eine Vorrichtung zur Verbesserung der Sichtverhältnisse in einem Kraftfahrzeug anzugeben, welche einerseits eine Verbesserung der Sicht auch bei schlechten Sichtverhältnissen gegenüber der Beleuchtung in sichtbarem Licht ermöglicht und andererseits eine Überschätzung der Sichtverhältnisse begrenzt.

Diese Aufgabe wird durch eine Vorrichtung zur Verbesserung der Sichtverhältnisse in einem Kraftfahrzeug mit den Merkmalen des Anspruchs 1 gelöst.

Vorteilhafte Weiterbildungen der Vorrichtung sind Gegenstand der Unteransprüche.

Die Erfindung betrifft eine Vorrichtung zur Verbesserung der Sichtverhältnisse in einem Kraftfahrzeug mit einer Steuereinheit zur Steuerung der erfindungsgemäßen Vorrichtung. Sie zeigt weiterhin eine bilderzeugende Einheit, welche wenigstens eine Strahlungsquelle für infrarote Strahlung zur Bestrahlung der Umgebung des Fahrzeuges, wenigstens eine infrarotempfindliche Kamera zur Erfassung zumindest eines Teils der bestrahlten Umgebung und wenigstens eine Displayeinheit zur Darstellung der erfassten Bilddaten enthält. Dabei ist die infrarote Strahlung von dem sichtbaren Licht zu unterscheiden, denn die infrarote Strahlung entspricht einer elektromagnetischen Strahlung, welche nicht im Frequenzbereich des sichtbaren Lichtes, sondern in einem Frequenzbereich unterhalb des sichtbaren Lichtes liegt. Es ist weiterhin möglich, nicht nur eine Strahlungsquelle sondern mehrere, in dem Fahrzeug verteilte Strahlungsquellen vorzusehen, die die Umgebung des Fahrzeuges zielgerichtet bestrahlen. Dadurch ist es möglich, nicht nur einen Teil des Bereiches vor dem Fahrzeug sondern auch den Seitenbereich und/oder den Rückbereich des Fahrzeuges oder die gesamte Umgebung des Fahrzeugs mit infraroter Strahlung zu bestrahlen und mit einer oder mehreren infrarotempfindlichen Kameras zu erfassen. Die Darstellung der erfassten Bildinformation erfolgt durch eine oder mehrere Displayeinheiten.

Zusätzlich zu der einen oder der mehreren infrarotempfindlichen Kameras ist wenigstens ein optischer Sensor vorgesehen, der mit einer Auswerteeinheit zur Erfassung von Gegenverkehr oder zur Erfassung einer Blendung geeignet ist. Mit Hilfe dieses optischen Sensors und der Auswerteeinheit ist es möglich, eine Information über das Vorhandensein von Gegenverkehr bzw. einer Blendung zu gewinnen, mit welcher die Steuereinheit in die Lage versetzt ist, eine oder mehrere Komponenten der bilderzeugenden Einheit zielgerichtet ein- oder auszuschalten und damit die Vorrichtung zur Verbesserung der Sichtverhältnisse in einem Kraftfahrzeug funktionsfähig zu machen oder sie in einen nichtfunktionsfähigen Zustand zu bringen. Dadurch ist die Vorrichtung quasi ein- oder ausgeschaltet. Um das Ausschalten zu erreichen, ist es nicht notwendig, alle Komponenten außer Betrieb zu setzen, sondern es genügt eine oder mehrere der Komponenten auszuschalten, die dann zielgerichtet für das Einschalten der Vorrichtung wieder in Betrieb genommen werden, damit die Vorrichtung insgesamt in Funktion gebracht wird und der Benutzer des Fahrzeuges mit der erfindungsgemäßen Vorrichtung in die Lage versetzt wird, die erfassten Bilddaten auf der Displayeinheit wahrzunehmen.

Durch die erfindungsgemäße Steuerung der Vorrichtung gelingt es, die Vorrichtung zur Verbesserung der Sichtverhältnisse in dem Moment in Betrieb zu setzen bzw. in Betrieb zu halten, wenn ein Gegenverkehr oder eine Blendung insbesondere durch den Gegenverkehr oder durch stationäre Lichtquellen oder andere reflektierende Gegenstände eine Behinderung oder Verschlechterung der Sichtverhältnisse bewirken. Durch diese zielgerichtete Einschalten der Vorrichtung gelingt es, das Blenden durch den Gegenverkehr oder durch andere störende Lichtquellen merklich zu begrenzen oder weitgehend zu eliminieren, da das blendende, sichtbare Licht mit Hilfe der Vorrichtung nicht an den Fahrer über die Displayeinheit wiedergegeben wird, sondern nur die erfasste infrarote Strahlung. Dies führt zu einem wesentlich verbesserten, blendungsärmeren Wahrnehmen der Fahrzeugumgebung. Durch diese blendungsärmere Wiedergabe der Fahrzeugumgebung gelingt es, die Belastung des Fahrzeugführers zu reduzieren und dadurch eine erhöhte Verkehrssicherheit zu erreichen. Dadurch gelingt es, nicht nur das Unfallrisiko des Fahrzeugs mit der erfindungsgemäßen Vorrichtung zu reduzieren, sondern die Unfallhäufigkeit des Verkehrs insgesamt zu reduzieren.

Nach einer bevorzugten Ausbildung der Erfindung wird die Steuereinheit zur Steuerung der Vorrichtung so ausgebildet, dass die Vorrichtung respektive wenigstens eine Komponente der bilderzeugenden Einheit bei der Erfassung von Gegenverkehr oder von einer Blendung eingeschaltet werden und dass diese zu dem Zeitpunkt, zu dem die Blendung bzw. der Gegenverkehr nicht mehr präsent ist, entweder unmittelbar oder zeitlich versetzt also später ausgeschaltet wird. Das unmittelbare Ausschalten nach der Erfassung des Gegenverkehrs bzw. nach der Blendung führt zu einem sehr frühen Ausschalten, was den Fahrzeugführer dazu zwingt, sich frühzeitig wieder der normalen Sicht also dem unmittelbaren Erfassen der Fahrzeugumgebung durch die Fahrzeugscheiben zu widmen und sich von der Darstellung auf der Displayeinheit zu lösen. Hiermit ist in besonderem Maße sichergestellt, dass der Fahrer sich nicht zu lange an dem Bild der Displayeinheit hält und dieses verbesserte, nicht der reellen Sicht entsprechende Bild nicht zur Grundlage einer möglichen Überschätzung der Fahrsituation macht und dadurch ggf. nicht mit angepasster Geschwindigkeit das Fahrzeug führt und dadurch einen Unfall provoziert.

Dagegen hat sich das zeitversetzte, spätere Ausschalten der Vorrichtung bzw. wenigstens einer Komponente der bildgebenden Einheit als für den Fahrzeugführer sehr angenehm erwiesen, da ein häufiges Aus- und Einschalten der Vorrichtung und damit ein wechselseitiges direktes Erfassen der Umgebung bzw. der Erfassung der Umgebung über die Displayeinheit weniger häufig der Fall ist. Gerade bei einem dichten Aufeinanderfolgen von Gegenverkehr ermöglicht diese Ausbildung der Erfindung ein einmaliges oder ein zahlenmäßig reduziertes Einschalten der Vorrichtung aufgrund des Beibehalten der Vorrichtungsfunktion. Dabei hat es sich besonderes bewährt, die Zeitspanne für das zeitliche versetzte, spätere Ausschalten im Bereich von mehreren Sekunden insbesondere im Bereich von 10 Sekunden zu wählen. Durch diese Zeitspanne unterhalb einer Minute gelingt es, das häufige Umschalten oder Umorientieren des Fahrzeugführers zwischen dem Display und der direkten Erfassung der Fahrzeugumgebung zu reduzieren und dadurch die Verkehrssicherheit bzw. die Belastung des Fahrzeugführers zu reduzieren.

Darüber hinaus hat es sich bewährt, einen Schalter zum Umschalten der Scheinwerfer zwischen dem Zustand Fern- und Abblendlicht vorzusehen und die Steuereinheit so auszubilden, dass der Umschalter durch die Steuereinheit so gesteuert wird, dass während dem Einschalten der Komponenten der bilderzeugenden Einheit von bzw. während dem Zustand der eingeschalteten Vorrichtung der oder die Scheinwerfer von dem Zustand Fernlicht in den Zustand Abblendlicht geschaltet werden oder im Zustand Abblendlicht gehalten werden. Dadurch ist sichergestellt, dass nicht nur der Fahrzeugführer des Fahrzeugs mit der erfindungsgemäßen Vorrichtung nicht mehr so stark durch den Gegenverkehr oder andere stationäre Lichtquellen oder ähnliches geblendet wird sondern auch der entgegenkommende Verkehr nicht durch das eigene Fernlicht geblendet wird. Dieses Umschalten zwischen Fernlicht und Abblendlicht erfolgt durch die erfindungsgemäße Vorrichtung automatisiert, was die Belastung des Fahrzeugführers erheblich senkt, was der Fahrzeugsicherheit zuträglich ist. Dabei kann der Eingriff durch die Steuereinheit auf das Umschalten der Scheinwerfer nicht nur durch das direkte Eingreifen auf den Schalter zum Umschalten sondern beispielhaft auch durch einen zweiten weiteren Schalter oder alternativen Schalter erfolgen.

Nach einer bevorzugten Ausbildung der Vorrichtung ist die Steuereinheit mit dem Schalten zum Ein- oder Umschalten der Scheinwerfer so verbunden und so ausgebildet, dass nur bei eingeschalteten Scheinwerfern die Vorrichtung zur Verbesserung der Sichtverhältnisse aktiviert und dementsprechend die wenigstens eine Komponente der bilderzeugenden Einheit abhängig von der Erfassung von Gegenverkehr oder von einer Blendung ein- oder ausgeschaltet wird. Mithin ist sichergestellt, dass die Vorrichtung zur Verbesserung der Sichtverhältnisse gerade bei schwierigen Lichtverhältnisse also bei Dunkelheit oder Nebel aktiviert ist und dementsprechend eine Blendung des Gegenverkehrs bzw. eine Blendung des Fahrzeugführers bzw. des Beifahrers des Fahrzeugs mit der erfindungsgemäßen Vorrichtung reduziert oder gar ausgeschlossen ist, in dem bei der Erfassung von Gegenverkehr oder der Blendung die Vorrichtung und damit die Ausgabe der erfassten Bilddaten über die Displayeinheit und damit ein Wahrnehmen der erfassten Bilddaten durch den Fahrzeugführer ermöglicht ist, wohingegen bei nichtvorliegendem Gegenverkehr oder ohne Blendung die Vorrichtung nicht aktiviert und die damit potenziell erfasste Bilddaten nicht ausgegeben werden können. Dementsprechend ist der Kraftfahrzeugführer gezwungen, die direkte Erfassung der Umgebung ohne Zwischenschaltung einer Bilderfassungseinheit - als Teil der Vorrichtung - wahrzunehmen, wodurch er der Gefahr einer Fehlinterpretation weniger unterliegt. Dies führt zu einer sehr wirkungsvollen Steuerung der Vorrichtung, was sich gerade im Hinblick auf ein zielgerichtetes Umschalten der Scheinwerfer bei der Aktivierung oder Nichtaktivierung der Vorrichtung als sehr vorteilhaft erwiesen hat.

Es hat sich als besonders vorteilhaft erwiesen, den wenigstens einen optischen Sensor als einfachen optischen Sensor insbesondere als Photodiode oder als Thermopile auszubilden, welcher insbesondere einen Erfassungsbereich zeigt, der einen Öffnungswinkel von etwa 30° oder weniger zeigt. Dabei ist der oder die optischen Sensoren so in dem Fahrzeug angeordnet, dass der Erfassungsbereich des oder der optischen Sensoren den Bereich der Umgebung in Fahrtrichtung vor dem Fahrzeug zumindest teilweise umfasst. Dadurch ist sichergestellt, dass der optische Sensor auf einfache und kostengünstige Weise den relevanten Bereich vor dem Fahrzeug, also den Bereich, in dem der Gegenverkehr zu erwarten ist, erfasst und dadurch eine einfache und sichere sowie kostengünstige Möglichkeit darstellt, die notwendige optischen Informationen für die Auswerteeinheit zur Feststellung des Vorhandenseins von Gegenverkehr oder einer Blendung zur Verfügung zu stellen. Gerade bei der Überprüfung, ob eine Blendung vorliegt oder nicht, hat sich die Ausbildung des optischen Sensors als einfacher optischer Sensor insbesondere als Photodiode oder Thermopile besonders bewährt. Diese einfachen optischen Sensoren ermöglichen ein ausreichend sicheres und robustes Erfassen der Umgebung und damit ein ausreichend sicheres Steuern der Vorrichtung zur Verbesserung der Sichtverhältnisse, damit eine ausreichende Verbesserung der Sichtverhältnisse ermöglicht ist. Durch die geeignete Wahl der einfachen optischen Sensoren gelingt es, ohne zusätzliche, optischen Komponenten zur Erweiterung oder Verengung des Erfassungsbereichs auszukommen. Dies führt zu einem einer kostengünstigen Realisierung der Vorrichtung. Dabei hat es sich bewährt, optische Sensoren zu wählen, die im Bereich des sichtbaren Lichts empfindlich sind bzw. die zusätzlich im infraroten Strahlungsbereich empfindlich sind. Durch diese kombinierte Empfindlichkeit ist eine sehr wirksame Erfassung auf Basis der durch das Umgebungslicht bzw. das Licht der Fahrzeugscheinwerfer aber auch durch die infrarote Strahlungsquelle beleuchteten Objekte gegeben, was zu einer sehr aussagekräftigen optischen Information führt, die eine sehr sichere Auswertung durch die Auswerteeinheit ermöglicht.

Darüber hinaus hat es sich besonders bewährt, als optischen Sensor eine lichtempfindliche Kamera vorzusehen, welche so im Fahrzeug angeordnet ist, dass ihr Erfassungsbereich den Bereich der Umgebung in Fahrtrichtung vor dem Fahrzeug zumindest teilweise umfasst. Diese lichtempfindliche Kamera ist mit einer Auswerteeinheit für die erfassten Bilddaten verbunden, welche geeignet ist, Gegenverkehr oder eine Blendung zu erfassen und die mit der Auswerteeinheit verbundene Steuereinheit mit einem Steuersignal zu versorgen, welches das Vorhandensein oder Nichtvorhandensein von Gegenverkehr oder Blendung repräsentiert. Die Steuereinheit steuert die Vorrichtung bzw. die bilderzeugende Einheit oder Komponenten davon, dahingehend, dass diese zielgerichtet ein- oder ausgeschaltet wird. Durch das erfindungsgemäße Vorsehen der lichtempfindlichen Kamera ist sichergestellt, dass eine sehr verlässliche und wirkungsvolle Auswertung des erfassten Bereiches der Umgebung in Fahrtrichtung erreicht wird und dadurch eine verlässliche Steuerung ermöglicht ist.

Dabei hat es sich besonders bewährt, die lichtempfindliche Kamera mit der infrarotempfindlichen Kamera zu kombinieren und eine Kamera vorzusehen, die sowohl im sichtbaren Lichtbereich empfindlich ist als auch im infraroten Strahlungsbereich empfindlich ist. Dies kann beispielsweise durch entsprechendes Vorsehen von CCD-Chips mit ausschließlich infrarotempfindlichen Pixeln und mit davon getrennten, ausschließlich lichtempfindlichen Pixeln erfolgen. Durch diese integrierte Realisierung des optischen Sensors mit der infrarotempfindlichen Kamera als eine einzige Kamera gelingt es, die Komponenten wirkungsvoll zu reduzieren und die Empfindlichkeit der Vorrichtung zu reduzieren und dadurch eine verlässliche und sichere Vorrichtung zu realisieren.

Vorzugsweise wird dabei die Vorrichtung so realisiert, dass ein schaltbarer Sperrfilter für sichtbares Licht vorgesehen ist, der die nichtsichtbare infrarote Strahlung durchlässt und der so geschalten ist, dass bei eingeschalteten Komponenten der bilderzeugenden Einheit, also beim Betrieb der Infrarotstrahlungsquelle und der infrarotbasierten Bildwiedergabe das schaltbare Sperrfilter aktiviert und dadurch der Empfang bzw. die Wiedergabe von sichtbarem Licht und damit die Ursache für eine Blendung des Fahrzeugführers über die Displayeinheit weitgehend ausgeschlossen ist. Dabei kann das schaltbare Sperrfilter sowohl vor der Kamera realisiert sein oder auch innerhalb der Kamera oder der Auswerteeinheit, in dem die optischen Informationen im sichtbaren Bereich der elektromagnetischen Strahlung also des sichtbaren Lichtes nicht zur Wiedergabe gebracht werden. In diesem Fall wird von einer elektronischen Filterung gesprochen. Eine solche elektronische Filterung erweist sich als sehr vorteilhaft, da sie ohne bewegliche Komponenten auskommt und sich daher als besonders robust und wenig störanfällig gerade im Betrieb eines Fahrzeugs erweist.

Darüber hinaus hat es sich besonderes bewährt, die Steuereinheit so auszubilden, dass zeitlich vor dem Ausschalten der wenigstens einen Komponente der bilderzeugenden Einheit ein insbesondere optisches und/oder akustisches Warnsignal abgegeben wird, welches auf das bevorstehende Ausschalten der bilderzeugenden Einheit bzw. der Vorrichtung zur Verbesserung der Sichtverhältnisse hinweist. Durch dieses vorzeitigt Warnen ist sichergestellt, dass der Fahrzeugführer nicht von dem Ausschalten und damit von dem Ende der zu Verfügungstellung der verbesserten Information über die Fahrzeugumgebung überrascht wird. Dadurch ist sichergestellt, dass ein rechtzeitiges Lösen des Blickes von der Displayeinheit durch den Fahrzeugführer gewährleistet ist und dies zu einem Zeitpunkt erfolgen kann, welcher das geringste Gefährdungspotenzial durch die aktuelle Fahrsituation zeigt. Damit kann z.B. ausgeschlossen werden, dass zu Unzeiten, beispielsweise direkt in einer Kurve die verbesserte Sicht aus der Displayeinheit beendet wird und der Fahrzeugführer dann ohne Vorwarnung während dem Durchfahren der Kurve überraschend die Blickrichtung verändern muss und dadurch eine Fahrunsicherheit generiert wird. Durch die Vorwarnung informiert, kann der Fahrer frühzeitig den Blick lösen und die Fahrzeugumgebung direkt wahrnehmen, ohne dass er durch einen Gegenverkehr gestört oder durch eine Blendung in der Sicht beeinträchtigt ist, denn diese Störursachen bewirken den Betrieb oder den Weiterbetrieb der erfindungsgemäßen Vorrichtung und damit das zur Verfügung stellen des verbesserten Bildes der Umgebung mittels auf der Displayeinheit.

Neben der Möglichkeit, nur einzelne Komponenten der bilderzeugenden Einheit, insbesondere nur die Displayeinheit ein- oder auszuschalten, was ein sehr schnelles Umschalten zwischen den Zuständen ermöglicht, ohne eine aufwendige Inbetriebnahme oder Aufwärmphase der einzelnen Komponenten erforderlich zu machen, ist es alternativ möglich, alle Komponenten der bilderzeugenden Einheit abhängig von der Erfassung von Gegenverkehr oder von einer Blendung ein- bzw. auszuschalten. Diese Art der Steuerung ermöglicht eine sehr einfache und wirkungsvolle Steuerung, die den Energieverbrauch der gesamten Vorrichtung minimiert, ohne dass die Funktionsfähigkeit der Vorrichtung wesentlich darunter leidet. Der optische Sensor mit Auswerteeinheit und Steuereinheit sind von diesem Ausschalten bzw. Einschalten nicht betroffen und ermöglichen das zielgerichtete verlässliche Inbetriebnehmen der bildgebenden Einheit mit allen ihren Komponenten und damit die vollständige Inbetriebnahme der Vorrichtung bzw. die zielgerichtete, beschränkte Außerbetriebstellung der Vorrichtung.

Als besonders vorteilhaft hat sich erwiesen, die infrarotempfindliche Kamera der bilderzeugenden Einheit nicht abhängig von der Erfassung von Gegenverkehr oder von einer Blendung aus- oder einzuschalten, dagegen aber die Displayeinheit und/oder die Strahlungsquelle der bilderzeugenden Einheit abhängig von der Erfassung von Gegenverkehr oder von einer Blendung ein- bzw. auszuschalten. Durch diese Ausbildung ist sichergestellt, dass die Komponente der bilderzeugenden Einheit, welche die zentrale Rolle spielt und bis zur vollen Funktionsfähigkeit eine gewisse Zeit benötigt, kontinuierlich in Betrieb ist und dadurch stets sichere und verlässliche Informationen über die Umgebung des Fahrzeugs erfasst und diese dann anschließend zwar abhängig vom Schaltzustand zur Wiedergabe gebracht werden können oder auch nicht. Durch diese Ausbildung ist sichergestellt, dass auch bei nichtvorhandener Bestrahlung durch die Infrarotstrahlungsquelle dennoch eine gewisse Information über die Umgebung durch die infrarotempfindliche Kamera gewonnen wird, die zu einer Auswertung der erfassten infraroten Bildinformation herangezogen werden kann. Dies kann beispielsweise im Hinblick auf das Vorhandensein von Gegenverkehr oder von Blendungen aber auch im Hinblick auf andere Zustände, beispielsweise Erfassung von Verkehrszeichen oder ähnliches erfolgen. Umgekehrt werden die Displayeinheit, die keine oder nur eine sehr kurze Einschaltzeit benötigt, zielgerichtet ein- oder ausgeschaltet, was den Stromverbrauch der gesamten Vorrichtung merklich senkt. Der Stromverbrauch lässt sich erheblich senken, wenn die Strahlungsquelle zusätzlich oder alternativ zu der Displayeinheit zielgerichtet bedarfsgesteuert, also abhängig von der Erfassung von Gegenverkehr oder von einer Blendung ein- bzw. ausgeschaltet wird. Da die Strahlungsquelle die hauptenergieverbrauchende Komponente der bilderzeugenden Einheit darstellt, wirkt sich das Ein- bzw. Ausschalten dieser Komponente als sehr bedeutsam im Hinblick auf den Energieverbrauch der gesamten Vorrichtung aus, was für die Integration der Vorrichtung in ein Fahrzeug von großer Bedeutung ist.

Im folgenden wird die Erfindung anhand einer beispielhaften Realisierung der erfindungsgemäßen Vorrichtung zur Verbesserung der Sichtverhältnisse in einem Kraftfahrzeug erläutert. Die Erfindung ist nicht auf diese Ausbildung beschränkt.

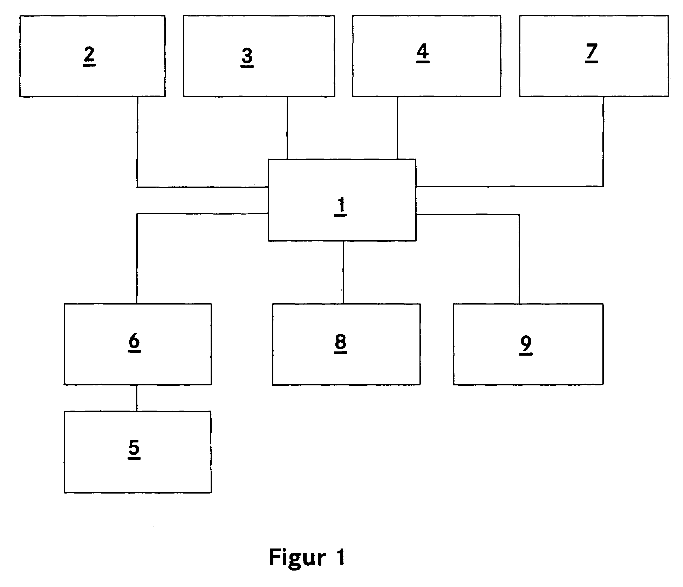

- Fig. 1: zeigt einen schematischen Aufbau der erfindungsgemäßen Vorrichtung zur Verbesserung der Sichtverhältnisse im Kraftfahrzeug.

Diese Vorrichtung zeigt eine Strahlungsquelle 2 für infrarote Strahlung, welche infrarote Strahlung mit einer Wellenlänge von etwa 800 nm ausstrahlt. Die Strahlungsquelle 2 ist als Infrarotlaser realisiert. Diese Strahlungsquelle 2 ist im Frontbereich des Fahrzeugs im Bereich der Scheinwerfer angeordnet und beleuchtet den Bereich vor dem Fahrzeug in Fahrtrichtung. Zusätzlich zeigt diese Vorrichtung eine infrarotempfindliche Kamera 3, welche so in dem Fahrzeug angeordnet und ausgerichtet ist, dass sie zumindest einen Teil der durch die infrarote Strahlungsquelle 2 bestrahlten Umgebung erfasst und die erfassten Bilddaten über die Steuereinheit 1 der Displayeinheit 4 zuführt. Mit der Displayeinheit 4 werden die ihr zugeführten von der Kamera 3 erfassten Bilddaten dargestellt und somit dem Fahrzeugführer zur Verfügung gestellt. Die Steuereinrichtung steuert dabei die infrarote Strahlungsquelle 2, die Kamera 3 und die Displayeinheit 4, welche gemeinsam die bilderzeugende Einheit darstellen.

Die infrarote Strahlungsquelle 2 strahlt dabei infrarote Strahlung aus, die von der Umgebung zumindest teilweise reflektiert wird und als reflektierte Strahlung von der infrarotempfindlichen Kamera 3 erfasst und in Bilddaten gewandelt wird. Diese Bilddaten werden durch die Displayeinheit 4 entweder unmittelbar oder nach einer gewissen Bildsignalverarbeitung mittels einer Bildauswerteeinheit wiedergegeben. Somit ist das in der Displayeinheit 4 dargestellte Bild ein infrarotes Abbild der Umgebung des Fahrzeuges. Da die infraroten Reflektions- bzw. Strahlungseigenschaften der Umgebung sich von den Eigenschaften im sichtbaren Lichtbereich unterscheiden, unterscheidet sich auch das dargestellte Bild von der direkten Sicht des Fahrzeugführers auf die Umgebung. Durch die Verwendung der erfindungsgemäßen Vorrichtung gelingt es, die Unterschiede vorteilhaft zu nutzen, was zu einer verbesserten Sicht insbesondere bei Nacht, aber auch bei schlechten Witterungsverhältnissen wie bei Regen oder bei Nebel gerade in schwierigen Situationen bei Blendung oder Gegenverkehr führt.

Die Steuereinheit 1 ist zusätzlich mit einer Auswerteeinheit 6 und mit einem zusätzlichen optischen Sensor 5 verbunden, welcher so in dem Fahrzeug angeordnet ist, dass er zumindest einen Teil der Fahrzeugumgebung in Fahrtrichtung vor dem Fahrzeug erfasst. In Zusammenwirken mit der Auswerteeinheit 6 ist der optische Sensor 5 in der Lage, insbesondere zu beurteilen, ob sich in dem Erfassungsbereich des optischen Sensors 5 ein entgegenkommendes Fahrzeug (Gegenverkehr) befindet oder eine starke Lichtquelle befindet, welche zu einer Blendung des Fahrzeugführers führen kann. Der optische Sensor ist dabei so ausgebildet, dass er sowohl sichtbares Licht als auch infrarote Strahlung erfassen kann. Dadurch gelingt es, eine sehr verlässliche Bildinformation zu gewinnen, welche geeignet ist, aussagekräftige Bewertungen hinsichtlich der Erfassung von Gegenverkehr oder von einer Blendung zu gewinnen. Gerade durch die Kombination der Empfindlichkeit im sichtbaren Lichtbereich und im Bereich der infraroten Strahlung, gelingt es, eine potenzielle Blendung des Fahrers sehr sicher zu erfassen. Zur Bewertung der Bildinformationen, die durch den optischen Sensor 5 gewonnen wurden, werden in der Auswerteeinheit 6 einzelne oder mehrere verschiedene Methoden der Mustererkennung, welche vielfach bekannt sind, zur Bewertung des Vorhandenseins von Gegenverkehr oder von einer Blendung herangezogen. Insbesondere wird im Hinblick auf die Blendung starke Kontrastunterschiede in Verbindung mit extremen Graustufenwerten insbesondere in Verbindung mit kreisrunden oder elliptischen Gestalten als Kriterien zur Bewertung von Blendungen durch Lichtquellen oder durch andere nicht aktiv sichtbares Licht oder infrarote Strahlung aussendende Gegenstände verwendet. Abhängig von dem Auswerteergebnis wird der Steuereinheit 1 ein Steuersignal zugeleitet, welches die Erfassung von Gegenverkehr oder das Vorhandensein einer Blendung bzw. eines Blendungsrisikos repräsentiert. Auf Basis dieses Steuersignals wird die Steuereinheit 1 die bilderzeugende Einheit zielgerichtet so steuern, dass bei der Erfassung von Gegenverkehr und/oder einer detektierten Blendung die bilderzeugende Einheit 2, 3, 4 insgesamt aktiviert ist und dadurch dem Fahrer ein infrarotes Abbild der Fahrzeugumgebung zur Verfügung gestellt wird. Dieses infrarote Abbild der Fahrzeugumgebung wird während des Vorhandenseins von Gegenverkehr oder einer potenziellen Blendung dem Fahrer zur Verfügung gestellt, aber auch einen Zeitraum darüber hinaus, der im Bereich von 20 sek. liegt. Durch diese Verlängerung der Aktivitätszeit der Vorrichtung zur Verbesserung der Sichtverhältnisse in einem Kraftfahrzeug respektive der bilderzeugenden Einheit davon ist ein sehr angenehmer Betrieb der Vorrichtung gegeben, ohne dass es zu häufigen, kurzfristigen Ein- und Ausschaltprozessen kommt. Ein stetiges Wechseln zwischen der direkten Erfassung der Fahrzeugumgebung ohne Verwendung der erfindungsgemäßen Vorrichtung und Benutzung der Vorrichtung mit der Displayeinheit 4 kann damit auf ein notwendiges Maß begrenzt werden.

Durch diese Ausbildung der erfindungsgemäßen Vorrichtung gelingt es, die Blendung des Fahrzeugführers insbesondere durch den Gegenverkehr drastisch einzuschränken, in dem der Fahrer während dieser Zeit auf das infrarote Abbild der Fahrzeugumgebung, welches ihm mittels der Displayeinheit 4 zur Verfügung gestellt wird, zurückgreift und sich nicht durch das direkte Erfassen der Fahrzeugumgebung und damit dem Blenden im sichtbaren Bereich zurückgreifen muss. Sollte der Fahrer dennoch die direkte Erfassung der Fahrzeugumgebung bevorzugen, so kann er diese ergänzend zu der Information aus dem infraroten Abbild der Fahrzeugumgebung nutzen und dadurch eine insgesamt sehr verlässliche Information über die Fahrzeugumgebung gewinnen und dadurch das Fahrzeug sehr sicher auch bei der Gefahr einer Blendung durch den Gegenverkehr im sichtbaren Bereich führen. Durch diese erfindungsgemäße Vorrichtung gelingt es, die Gefahr von Unfällen aufgrund von schlechten Sichtverhältnissen gerade durch die Blendung durch den Gegenverkehr in der Nacht oder bei Nebel oder schlechter Sicht erheblich zu senken und dadurch die Verkehrssicherheit deutlich zu erhöhen.

Zusätzlich ist die Steuereinheit 1 mit einem Steuergerät 7 zur Steuerung der Fahrzeugscheinwerfer verbunden. Mit dem Steuergerät 7 werden die Fahrzeugscheinwerfer zwischen den Zustand Fernlicht und Abblendlicht umgeschaltet. Das Steuergerät 7 ist mit einem Schalter im Bereich des Lenkrades des Fahrzeuges so verbunden, dass der Fahrzeugführer über den Schalter Einfluss auf die Steuerung der Fahrzeugscheinwerfer nehmen kann. Zusätzlich besteht die Möglichkeit, die Fahrzeugscheinwerfer über das Steuergerät 7 durch die Steuereinheit 1 so zu steuern, dass abhängig von der Detektion von Gegenverkehr bzw. einer Blendung mit Hilfe des optischen Sensors 5 und der Auswerteeinheit 6 über die Steuereinheit 1 der Zustand der Fahrzeugscheinwerfer von Fernlicht in Abblendlicht geschaltet wird. Dadurch gelingt es, nicht nur die Blendung des eigenen Fahrzeugführers und möglicher anderer Fahrzeuginsassen zu reduzieren oder zu verhindern, sondern auch umgekehrt den negativen Einfluss durch die Blendung anderer Fahrzeuge oder anderer Verkehrsteilnehmer aufgrund des eigenen Fernlichts durch das Umschalten auf Abblendlicht zu reduzieren oder zu verhindern. Dies führt zu einer deutlichen Verbesserung der Sicherheit im Straßenverkehr, da gerade diese Blendungen zu einer Beeinträchtigung der direkten Erfassung der Fahrzeugumgebung ohne die erfindungsgemäße Vorrichtung führt. Damit wird deutlich, dass durch diese Ausbildung der erfindungsgemäßen Vorrichtung nicht nur eine unmittelbare Verbesserung der Sicherheit des Fahrzeugs mit der erfindungsgemäßen Vorrichtung und damit des Fahrzeugführers geschaffen ist sondern auch eine Verbesserung der Sicherheit des Gegenverkehrs und damit der anderen Verkehrsteilnehmer. Insgesamt führt dies zu einer Verbesserung der gesamten Verkehrssicherheit und damit zu einer Reduzierung der Unfallgefahr und damit der Anzahl der Unfälle.

Nach dem Ende der Detektion von Gegenverkehr oder einer Blendung wird durch das Steuergerät 7 wieder von dem Zustand Abblendlicht in den ursprünglichen Zustand Fernlicht geschaltet, so dass der Fahrzeugführer die Möglichkeit hat, die Fahrzeugumgebung direkt mit der besonders wirkungsvollen Beleuchtung der Fahrzeugscheinwerfer im Fernlichtzustand zu erfassen. In diesem Fall wird direkt oder kurzer Zeit danach die bilderzeugende Einheit so gesteuert, dass das infrarote Abbild der Fahrzeugumgebung nicht mehr zur Verfügung steht. Damit ist auch sichergestellt, dass der Fahrzeugführer sich nicht auf die verbesserte Sicht durch die erfindungsgemäße Vorrichtung allein verlässt und durch die bessere Sicht verleitet, die Wettersituation überschätzt und durch diese Fehlinterpretation bspw. mit unangemessener Geschwindigkeit fährt und dadurch sich selbst und auch andere Verkehrsteilnehmer gefährdet.

Neben der Strahlungsquelle 2, welche im Frontbereich des Fahrzeugs angeordnet ist, ist zusätzlich im Heckbereich des Fahrzeugs eine Strahlungsquelle 8 für infrarote Strahlung angeordnet. Diese Strahlungsquelle 8 bestrahlt den Bereich hinter dem Fahrzeug, so dass durch die zusätzlich im Heckbereich angeordnete Kamera 9, welche sowohl im infraroten Strahlungsbereich als auch im sichtbaren Lichtbereich empfindlich ist, den bestrahlten rückwärtigen Bereich des Fahrzeugs erfasst und die erfassten Bildinformationen über die Displayeinheit 4 dem Fahrzeugführer zur Verfügung stellen kann. Mittels dieser Strahlungsquelle 8 und der Kamera 9 ist es möglich, ein infrarotes Abbild des rückwärtigen Bereiches des Fahrzeugs mit der erfindungsgemäßen Vorrichtung zu gewinnen und dem Fahrzeugführer zur Verfügung zu stellen, so dass auch hier eine Blendung des Fahrzeugführers beispielsweise bei dem Blick in den Rückspiegel oder bei dem direkten Blick beim Rückwärtsfahren weitgehend ausgeschlossen werden kann, da der Fahrzeugführer nun auf das infrarote Abbild des rückwärtigen Bereiches in der Displayeinheit 4 zurückgreifen kann.

Da die Kamera 9 mit einer integrierten Auswerteeinheit verbunden und im sichtbaren Licht empfindlich ist, ist es auch möglich, eine Blendung im sichtbaren Lichtbereich durch nachfolgenden Verkehr zu erfassen und dementsprechend die Vorrichtung so zu steuern, dass bei Bedarf durch den Fahrzeugführer initiiert - beispielsweise durch Betätigung eines Tasters - das infrarote Abbild des rückwärtigen Bereiches auf dem Display dargestellt wird, auch wenn kein entgegenkommender Verkehr bzw. keine Blendung durch den optischen Sensor 5 und die Auswerteeinheit 6 festgestellt ist. Darüber hinaus ist die Kamera so ausgebildet, dass durch die interne Bildauswertung sichergestellt ist, dass das infrarote Abbild der Umgebung ohne wesentliche Störung durch das sichtbare Licht erfasst und über die Steuereinheit 1 an die Displayeinheit 4 wiedergegeben wird. Dies kann dadurch erfolgen, dass der CCD-Chip der Kamera 9 Pixels aufweist, die ausschließlich im Bereich der infraroten Strahlung empfindlich sind während andere Pixel ausschließlich im sichtbaren Lichtbereich empfindlich sind, so dass diese verschiedenen Pixel voneinander getrennt ausgelesen werden können und dadurch eine Trennung des infraroten Bildes von dem Bild unter Verwendung des sichtbaren Lichtes erfolgen kann. Dies führt zu einer sehr verlässlichen Steuerung der Vorrichtung, gerade im Hinblick auf die Darstellung eines Bildes aus dem rückwärtigen Umgebungsbereiches des Fahrzeuges und damit zu einer sehr sicheren Information des Fahrzeugführers. Dabei ist die Steuerung der Strahlungsquelle 8 und der Kamera 9 in entsprechender Weise wie die Steuerung der Strahlungsquelle 2 und der infrarotempfindlichen Kamera 3 in Verbindung mit dem optischen Sensor 5 und der Auswerteeinheit 6 gewählt.

Mithin erweist sich die dargestellte erfindungsgemäße Vorrichtung als sehr nützlich zur Vermeidung von unerwünschten Blendungen des Fahrzeugführers oder der anderen Fahrzeuginsassen und damit als Vorrichtung zur Verbesserung der Sicht nicht nur in der Nacht sondern auch bei schlechten Witterungsverhältnissen gerade in der Situation von Gegenverkehr oder einer Blendung durch den Gegenverkehr bzw. durch andere insbesondere stationäre Lichtquellen. Durch diese Verbesserung der Sicht gelingt es, eine erhöhte Verkehrssicherheit zu erreichen.

## Patentansprüche

1. Vorrichtung zur Verbesserung der Sichtverhältnisse in einem Kraftfahrzeug,
mit einer Steuereinheit (1) zur Steuerung der Vorrichtung, und mit einer bilderzeugenden Einheit,
welche folgenden Komponenten enthält
wenigstens eine Strahlungsquelle (2) für infrarote Strahlung zur Bestrahlung der Umgebung des Fahrzeuges,
wenigstens eine infrarotempfindliche Kamera (3) zur Erfassung zumindest eines Teils der bestrahlten Umgebung,
und wenigstens eine Displayeinheit (4) zur Darstellung erfasster Bilddaten,
dass ein optischer Sensor (5) und eine Auswerteeinheit zur Erfassung von Gegenverkehr oder von einer Blendung vorgesehen ist,
welche mit der Steuereinheit verbunden ist und
diese Steuereinheit so ausgebildet ist, dass abhängig von der Erfassung von Gegenverkehr oder von einer Blendung wenigstens eine Komponente der bilderzeugenden Einheit eingeschaltet oder ausgeschaltet wird,
**dadurch gekennzeichnet,**
**dass** die Steuereinheit so ausgebildet ist, dass wenigstens eine Komponente der bilderzeugenden Einheit während der Erfassung von Gegenverkehr oder von einer Blendung eingeschaltet ist und anschließend bei nicht vorliegender Erfassung von Gegenverkehr oder von einer Blendung ausgeschaltet wird.

2. Vorrichtung zur Verbesserung der Sichtverhältnisse in einem Kraftfahrzeug nach Anspruch 1,
**dadurch gekennzeichnet,**
**dass** die Steuereinheit so ausgebildet ist, dass wenigstens eine Komponente der bilderzeugenden Einheit bei der Erfassung von Gegenverkehr oder von einer Blendung eingeschaltet und diese zeitversetzt nach der Erfassung von Gegenverkehr oder von einer Blendung ausgeschaltet wird.

3. Vorrichtung zur Verbesserung der Sichtverhältnisse in einem Kraftfahrzeug nach einem der vorstehenden Ansprüche,
**dadurch gekennzeichnet,**
**dass** ein Schalter zum Umschalten der Scheinwerfer des Fahrzeuges zwischen den Zuständen Fern- und Abblendlicht vorgesehen ist
und **dass** die Steuereinheit so ausgebildet ist, dass durch die Steuereinheit gesteuert während dem Einschalten von Komponenten der bilderzeugenden Einheit von dem Zustand Fernlicht in den Zustand Abblendlicht geschaltet wird.

4. Vorrichtung zur Verbesserung der Sichtverhältnisse in einem Kraftfahrzeug nach einem der vorstehenden Ansprüche,
**dadurch gekennzeichnet,**
**dass** ein Schalter zum Ein- oder Umschalten der Scheinwerfer des Fahrzeuges vorgesehen ist,
der mit der Steuereinheit verbunden ist,
die so ausgebildet ist, dass nur bei einschalteten Scheinwerfern durch die Steuereinheit gesteuert die wenigstens eine Komponente der bilderzeugenden Einheit abhängig von der Erfassung von Gegenverkehr oder von einer Blendung eingeschalten oder ausgeschalten wird.

5. Vorrichtung zur Verbesserung der Sichtverhältnisse in einem Kraftfahrzeug nach einem der vorstehenden Ansprüche,
**dadurch gekennzeichnet,**
**dass** der optische Sensor als einfacher optischer Sensor, insbesondere als Photodiode ausgebildet ist, welche einen Erfassungsbereich zeigt, der einen Öffnungswinkel von etwa 30 Grad oder darunter aufweist,
und der optische Sensor so in dem Fahrzeug angeordnet ist, dass sein Erfassungsbereich den Bereich der Umgebung in Fahrtrichtung vor dem Fahrzeug zumindest teilweise umfasst.

6. Vorrichtung zur Verbesserung der Sichtverhältnisse in einem Kraftfahrzeug nach einem der vorstehenden Ansprüche 1 bis 4,
**dadurch gekennzeichnet,**
**dass** der optische Sensor als lichtempfindliche Kamera ausgebildet ist,
welche so in dem Fahrzeug angeordnet ist, dass ihr Erfassungsbereich den Bereich der Umgebung in Fahrtrichtung vor dem Fahrzeug zumindest teilweise umfasst,
und welche mit einer Auswerteeinheit für die erfassten Bilddaten verbunden ist,
die geeignet ist, Gegenverkehr oder Blendung zu erfassen und der Steuereinheit dies als Steuersignal zuzuführen.

7. Vorrichtung zur Verbesserung der Sichtverhältnisse in einem Kraftfahrzeug nach Anspruch 6,
**dadurch gekennzeichnet,**
**dass** der optische Sensor und die infrarotempfindliche Kamera als eine einzige gemeinsame Kamera ausgebildet sind, wobei die Vorrichtung einen schaltbaren Sperrfilter für sichtbares Licht aufweist, der nicht-sichtbare infrarote Strahlung nicht sperrt und der so geschalten ist, dass bei eingeschalteten Komponenten der bilderzeugenden Einheit der schaltbare Sperrfilter aktiviert ist.

8. Vorrichtung zur Verbesserung der Sichtverhältnisse in einem Kraftfahrzeug nach einem der vorstehenden Ansprüche,
**dadurch gekennzeichnet,**
**dass** die Steuereinheit so ausgebildet ist, dass zeitlich vor dem Ausschalten wenigstens einer Komponente der bilderzeugenden Einheit ein insbesondere optisches und/oder akustisches Warnsignal abgegeben wird.

9. Vorrichtung zur Verbesserung der Sichtverhältnisse in einem Kraftfahrzeug nach einem der vorstehenden Ansprüche,
**dadurch gekennzeichnet,**
**dass** die Steuereinheit so ausgebildet ist, dass alle Komponenten der bilderzeugenden Einheit abhängig von der Erfassung von Gegenverkehr oder von einer Blendung eingeschalten oder ausgeschalten werden.

10. Vorrichtung zur Verbesserung der Sichtverhältnisse in einem Kraftfahrzeug nach einem der vorstehenden Ansprüche 1 bis 8,
**dadurch gekennzeichnet,**
**dass** die Steuereinheit so ausgebildet ist, dass allein die Displayeinheit der bilderzeugenden Einheit abhängig von der Erfassung von Gegenverkehr oder von einer Blendung eingeschalten oder ausgeschalten wird.

11. Vorrichtung zur Verbesserung der Sichtverhältnisse in einem Kraftfahrzeug nach einem der vorstehenden Ansprüche 1 bis 8,
**dadurch gekennzeichnet,**
**dass** die Steuereinheit so ausgebildet ist, dass die infrarotempfindliche Kamera der bilderzeugenden Einheit nicht abhängig von der Erfassung von Gegenverkehr oder von einer Blendung geschaltet wird wohingegen die Displayeinheit und/oder die Strahlungsquelle der bilderzeugenden Einheit abhängig von der Erfassung von Gegenverkehr oder von einer Blendung eingeschalten oder ausgeschalten werden.

## Claims

1. Device for improving the visibility conditions in a motor vehicle,
having a control unit (1) for controlling the device,
and having an image-generating unit which contains the following components
at least one radiation source (2) for infrared radiation for irradiating the surroundings of the vehicle,
at least one infrared-sensitive camera (3) for sensing at least part of the irradiated surroundings,
and at least one display unit (4) for displaying sensed image data,
in that an optical sensor (5) and an evaluation unit is provided for sensing oncoming traffic or dazzling,
which is connected to the control unit, and this control unit is embodied in such a way that at least one component of the image-generating unit is switched on or off as a function of the sensing of oncoming traffic or of dazzling,
**characterized in that** the control unit is embodied in such a way that at least one component of the image-generating unit is switched on during the sensing of oncoming traffic or of dazzling, and is subsequently switched off when oncoming traffic or dazzling is not sensed.

2. Device for improving the visibility conditions in a motor vehicle according to Claim 1, **characterized in that** the control unit is embodied in such a way that at least one component of the image-generating unit is switched on when oncoming traffic or dazzling is sensed, and said unit is switched off with a time delay after the sensing of oncoming traffic or of dazzling.

3. Device for improving the visibility conditions in a motor vehicle according to one of the preceding claims, **characterized in that** a switch for switching over the headlights of the vehicle between the states of full beam and dipped headlights is provided, and **in that** the control unit is embodied in such a way that the control unit controls switching over from the state of full beam into the state of dipped headlights during the switching on of components of the image-generating unit.

4. Device for improving the visibility conditions in a motor vehicle according to one of the preceding claims, **characterized in that** a switch for switching the headlights of the vehicle on or over is provided and is connected to the control unit which is embodied in such a way that the at least one component of the image-generating unit is switched on or off, under the control of the control unit, as a function of the sensing of oncoming traffic or of dazzling only when the headlights are switched on.

5. Device for improving the visibility conditions in a motor vehicle according to one of the preceding claims, **characterized in that** the optical sensor is embodied as a simple optical sensor, in particular as a photodiode, which exhibits a sensing range which has an angle of aperture of approximately 30 degrees or below, and the optical sensor is arranged in the vehicle in such a way that its sensing range at least partially covers the area of the surroundings in front of the vehicle in the direction of travel.

6. Device for improving the visibility conditions in a motor vehicle according to one of the preceding claims 1 to 4, **characterized in that** the optical sensor is embodied as a light-sensitive camera which is arranged in the vehicle in such a way that its sensing range at least partially covers the area of the surroundings in front of the vehicle in the direction of travel and which is connected to the evaluation unit for the acquired image data which is suitable for sensing oncoming traffic or dazzling and feeding this to the control unit as a control signal.

7. Device for improving the visibility conditions in a motor vehicle according to Claim 6, **characterized in that** the optical sensor and the infrared-sensitive camera are embodied as a single common camera, wherein the device has a switchable stop filter for visible light, which stop filter does not stop invisible infrared radiation and is switched in such a way that when the components of the image-generating unit are switched on the switchable stop filter is activated.

8. Device for improving the visibility conditions in a motor vehicle according to one of the preceding claims, **characterized in that** the control unit is embodied in such a way that before at least one component of the image-generating unit is switched off a warning signal which is in particular an optical and/or acoustic warning signal is emitted.

9. Device for improving the visibility conditions in a motor vehicle according to one of the preceding claims, **characterized in that** the control unit is embodied in such a way that all the components of the image-generating unit are switched on or off as a function of the sensing of oncoming traffic or of dazzling.

10. Device for improving the visibility conditions in a motor vehicle according to one of the preceding Claims 1 to 8, **characterized in that** the control unit is embodied in such a way that solely the display unit of the image-generating unit is switched on or off as a function of the sensing of the oncoming traffic or of dazzling.

11. Device for improving the visibility conditions in a motor vehicle according to one of the preceding Claims 1 to 8, **characterized in that** the control unit is embodied in such a way that the infrared-sensitive camera of the image-generating unit is not switched as a function of the sensing of oncoming traffic or of dazzling, whereas the display unit and/or the radiation source of the image-generating unit are switched on or off as a function of the sensing of oncoming traffic or of dazzling.

## Revendications

1. Dispositif d'amélioration des conditions de visibilité dans un véhicule automobile, lequel dispositif présente :
une unité de commande (1) pour la commande du dispositif,
et une unité de formation d'image qui contient les composants suivants :
au moins une source de rayonnement (2) qui émet un rayonnement infrarouge pour éclairer l'environnement du véhicule,
au moins une caméra (3) sensible à l'infrarouge qui saisit au moins une partie de l'environnement éclairé,
et au moins une unité d'affichage (4) qui présente les données d'image saisies, tandis qu'un détecteur optique (5) et une unité d'évaluation détectent les véhicules circulant en sens opposé ou un éblouissement et sont reliés à l'unité de commande,
cette unité de commande étant configurée de telle sorte qu'au moins un composant de l'unité de formation d'image est branché et ou débranché en fonction de la détection d'un véhicule circulant en sens opposé ou d'un éblouissement,
**caractérisé en ce que**
l'unité de commande est configurée de telle sorte qu'au moins un composant de l'unité de formation d'image est branché pendant la détection d'un véhicule circulant en sens opposé ou d'un éblouissement et est ensuite débranché lorsque aucun véhicule circulant en sens opposé ni éblouissement ne sont détectés.

2. Dispositif selon la revendication 1 pour l'amélioration des conditions de visibilité dans un véhicule automobile, **caractérisé en ce que** l'unité de commande est configurée de telle sorte qu'au moins un composant de l'unité de formation d'image est branché pendant la détection d'un véhicule circulant en sens opposé ou d'un éblouissement et est ensuite débranché après un décalage de temps après la détection d'un véhicule circulant en sens opposé ou d'un éblouissement.

3. Dispositif selon l'une quelconque des revendications précédentes, pour l'amélioration des conditions de visibilité dans un véhicule automobile, **caractérisé en ce qu'**un commutateur de commutation des phares du véhicule entre les feux de route et les feux de croisement est prévu et **en ce que** l'unité de commande est configurée de telle sorte que sous la commande de l'unité de commande, les phares sont passés de la position feux de route à la position feux de croisement pendant le branchement de composants de l'unité de formation d'image.

4. Dispositif selon l'une quelconque des revendications précédentes, pour l'amélioration des conditions de visibilité dans un véhicule automobile, **caractérisé en ce qu'**un commutateur de branchement et de débranchement des phares du véhicule est prévu, est relié à l'unité de commande et est configuré de telle sorte que ledit au moins un composant de l'unité de formation d'image est branché ou débranché sous la commande de l'unité de commande en fonction de la détection d'un véhicule circulant en sens opposé ou d'un éblouissement uniquement lorsque les phares sont allumés.

5. Dispositif selon l'une quelconque des revendications précédentes, pour l'amélioration des conditions de visibilité dans un véhicule automobile, **caractérisé en ce que** le détecteur optique est configuré comme détecteur optique simple, en particulier comme photodiode, dont le champ de saisie forme un angle d'ouverture d'environ 30 degrés ou moins, le détecteur optique étant disposé dans le véhicule de telle sorte que son champ de saisie comprenne au moins en partie la zone de l'environnement située devant le véhicule dans la direction d'avancement.

6. Dispositif selon l'une quelconque des revendications 1 à 4 qui précèdent, pour l'amélioration des conditions de visibilité dans un véhicule automobile, **caractérisé en ce que** le détecteur optique est configuré comme caméra sensible à la lumière disposée dans le véhicule de telle sorte que son champ de saisie comprenne au moins en partie la zone de l'environnement située devant le véhicule dans la direction d'avancement et est relié à une unité d'évaluation des données d'image saisies qui permet de détecter les véhicules circulant en sens opposé ou un éblouissement et de l'indiquer sous la forme d'un signal de commande à l'unité de commande.

7. Dispositif selon la revendication 6 pour l'amélioration des conditions de visibilité dans un véhicule automobile, **caractérisé en ce que** le détecteur optique et la caméra sensible à l'infrarouge sont configurés comme unique caméra commune, le dispositif présentant un filtre commutable de blocage de la lumière visible qui ne bloque pas le rayonnement infrarouge invisible et qui est raccordé de telle sorte que le filtre de blocage commutable est activé lorsque les composants de l'unité de formation d'image sont branchés.

8. Dispositif selon l'une quelconque des revendications précédentes, pour l'amélioration des conditions de visibilité dans un véhicule automobile, **caractérisé en ce que** l'unité de commande est configurée de manière à délivrer un signal d'alarme, en particulier optique et/ou acoustique, avant le débranchement d'au moins un composant de l'unité de formation d'image.

9. Dispositif selon l'une quelconque des revendications précédentes, pour l'amélioration des conditions de visibilité dans un véhicule automobile, **caractérisé en ce que** l'unité de commande est configurée de telle sorte que tous les composants de l'unité de formation d'image sont branchés ou débranchés en fonction de la détection d'un véhicule circulant en sens opposé ou d'un éblouissement.

10. Dispositif selon l'une quelconque des revendications 1 à 8 qui précèdent, pour l'amélioration des conditions de visibilité dans un véhicule automobile, **caractérisé en ce que** l'unité de commande est configurée de telle sorte que seule l'unité d'affichage de l'unité de formation d'image est branchée ou débranchée en fonction de la détection d'un véhicule circulant en sens opposé ou d'un éblouissement.

11. Dispositif selon l'une quelconque des revendications 1 à 8 qui précèdent, pour l'amélioration des conditions de visibilité dans un véhicule automobile, **caractérisé en ce que** l'unité de commande est configurée de telle sorte que la caméra sensible à l'infrarouge de l'unité de formation d'image n'est pas branchée en fonction de la détection d'un véhicule circulant en sens opposé ou d'un éblouissement, mais qu'en revanche l'unité d'affichage et/ou la source de rayonnement de l'unité de formation d'image sont branchées ou débranchées en fonction de la détection d'un véhicule circulant en sens opposé ou d'un éblouissement.
